Europäisches Patentamt

European Patent Office

Office européen des brevets

(19)

(11) **EP 0 656 810 B1**

(12) **FASCICULE DE BREVET EUROPEEN**

(45) Date de publication et mention
de la délivrance du brevet:
**13.01.1999 Bulletin 1999/02**

(21) Numéro de dépôt: **94920994.4**

(22) Date de dépôt: **29.06.1994**

(51) Int. Cl.$^6$: **B01J 29/44**, B01D 53/56,
B01J 37/14, B01D 53/86,
B01D 53/94

(86) Numéro de dépôt international:
**PCT/FR94/00792**

(87) Numéro de publication internationale:
**WO 95/01222 (12.01.1995 Gazette 1995/03)**

(54) **CATALYSEUR ET PROCEDE CATALYTIQUE POUR LA REDUCTION DES OXYDES D AZOTE.**

KATALYSATOR UND KATALYTISCHES VERFAHREN ZUR REDUKTION VON STICKSTOFFOXIDEN

CATALYST AND CATALYTIC METHOD FOR REDUCING NITROGEN OXIDES

(84) Etats contractants désignés:
**AT BE CH DE DK ES FR GB GR IE IT LI LU MC NL PT SE**

(30) Priorité: **30.06.1993 FR 9308006**

(43) Date de publication de la demande:
**14.06.1995 Bulletin 1995/24**

(73) Titulaire: **GAZ DE FRANCE**
**75017 Paris (FR)**

(72) Inventeurs:
• **LECUYER, Christine**
**F-92300 Levallois-Perret (FR)**
• **FAKCHE, Ahmed**
**F-38090 Villefontaine (FR)**

• **GARBOWSKI, Edouard**
**F-69100 Villeurbanne (FR)**
• **POMMIER, Bernard**
**F-69300 Caluire (FR)**
• **PRIMET, Michel**
**F-69140 Rillieux-la-Pape (FR)**

(74) Mandataire:
**Durand, Yves Armand Louis**
**CABINET WEINSTEIN**
**20, Avenue de Friedland**
**75008 Paris (FR)**

(56) Documents cités:
**EP-A- 0 011 926       EP-A- 0 303 527**
**EP-A- 0 400 591       EP-A- 0 541 008**
**US-A- 4 232 181**

**Description**

L'invention concerne un catalyseur de réduction des $NO_x$ et plus particulièrement de NO et $NO_2$ ainsi qu'un procédé de réduction de ces $NO_x$.

On connaît de nombreux procédés de transformation des $NO_x$ en azote.

Un de ces procédés consiste à utiliser comme agent réducteur du monoxyde de carbone ou de l'hydrogène et comme catalyseur un catalyseur à base de métaux précieux supportés sur alumine ou silice.

Mais en milieu oxydant, l'oxydation de l'hydrogène et du monoxyde de carbone par l'oxygène gazeux précède la réduction de NO par l'hydrogène et cette réaction de réduction de NO par l'hydrogène n'aura donc lieu que lorsque tout l'oxygène aura été consommé.

Cela signifie qu'en présence d'un fort excès d'oxygène, il est nécessaire d'utiliser des procédés de réduction sélective. Le procédé le plus répandu consiste à utiliser l'ammoniac comme agent réducteur des $NO_x$ en présence d'un catalyseur constitué de $V_2O_5$ et $WO_3$ déposés sur $TiO_2$. Ce catalyseur et ce procédé permettent la réduction des $NO_x$ en azote même en présence de poisons soufrés.

Mais les matériaux catalytiques ont une durée de vie limitée et l'installation demande un investissement important. De plus le stockage de l'ammoniac ainsi que son utilisation sont délicats.

IWAMOTO et coll, proposent dans Catal. Today, 10, (1991), 57, de remplacer l'ammoniac par des hydrocarbures. Ainsi les hydrocarbures réducteurs sélectifs seraient les hydrocarbures à plus de deux carbones et en particulier le propane et le propène. Les catalyseurs utilisés sont des zéolithes à rapport Si/Al important échangées ou non avec des métaux de transition.

S. SUBRAMANIAN et coll dans Ind Eng. Chem. Res., 31, (1992), 2460, ont étudié la réduction sélective des $NO_x$ par le méthane en présence d'un catalyseur constitué de palladium supporté sur alumine et concluent que l'élimination simultanée du méthane et de NO ne peut avoir lieu avec ce type de catalyseur.

Cependant, dans la demande de brevet européen n° EP 0 499 286 A2, Y. KAWAI décrit des catalyseurs constitués de Co-Ag et de Co-Pd sur zéolithe qui permettraient d'éliminer simultanément le monoxyde de carbone, NO et le méthane même en présence de 5 % d'oxygène et à 500°C. Dans les mêmes conditions un catalyseur constitué de palladium supporté sur une zéolithe de type MFI ne convertirait pas NO.

LI et ARMOR dans le brevet US n° 5 149 512 utilisent un catalyseur constitué d'une zéolithe, en particulier de type MFI, échangée avec du Co pour la réduction sélective des $NO_x$.

Mais le cobalt n'est pas utilisable dans les procédés industriels de traitement d'effluents de combustion ni dans les pots catalytiques des véhicules automobiles car il peut se transformer en complexes cobalt carbonyles très toxiques et polluants pour l'environnement.

Un autre inconvénient des catalyseurs de l'art antérieur décrit en particulier par LI, BATTAVIO et ARMOR dans "Effect of Water Vapor on the Selective Reduction of NO by methane over Cobalt-Exchanged ZSM-5" Journal of catalysis 142, 561-571, (1993), est leur perte d'activité en présence d'eau.

Pour pallier les inconvénients précédents et en contraste avec cet état de la technique, la présente invention propose un catalyseur de réduction des $NO_x$ constitué d'une zéolithe du type MFI échangée avec entre 0,3 % et 2 % en poids de Pd par rapport au poids total du catalyseur, ladite zéolithe ayant un rapport Si/Al compris entre 15 et 19.

Selon une caractéristique du catalyseur de l'invention, ladite zéolithe est échangée avec 0,5 % en poids de Pd.

L'invention propose aussi un procédé de réduction des $NO_x$ par le méthane ou tout mélange contenant majoritairement du méthane, tel que du gaz naturel, comprenant une étape de mise en contact d'un milieu réactionnel comprenant entre autres du méthane, de l'oxygène et des $NO_x$ avec un catalyseur constitué d'une zéolithe de type MFI échangée avec entre 0,3 % et 2 % en poids de palladium par rapport au poids total du catalyseur, et ayant un rapport Si/Al compris entre 15 et 19, ce qui permet de réduire sélectivement les $NO_x$ en $N_2$.

Selon une caractéristique du procédé de l'invention, la zéolithe de type MFI est échangée avec 0,5 % en poids de palladium par rapport au poids total du catalyseur.

Selon une autre caractéristique du procédé de l'invention, ledit catalyseur est obtenu avec de l'hydroxyde de tétrammine-palladium II en tant que précurseur de Pd.

Selon encore une autre caractéristique du procédé de l'invention, le catalyseur est activé, avant utilisation, sous oxygène, par un procédé comprenant les étapes de : montée en température à partir de la température ambiante jusqu'à 300°C avec une vitesse de montée en température de 0,5°C/mn, maintien à 300°C pendant une heure, montée en température de 300°C à 500°C avec une vitesse de montée en température de 0,5°C/mn, maintien à 500°C pendant 1 heure, et enfin descente en température de 500°C à 300°C.

Selon toujours une autre caractéristique du procédé de l'invention, après l'étape de descente en température de 500°C à 600°C citée ci-dessus, on réalise une étape supplémentaire de balayage par un gaz inerte, tel que l'hélium, à 300°C.

Selon un mode de mise en oeuvre du procédé de l'invention, le milieu réactionnel peut contenir jusqu'à 0,8 % en volume de CO qui sont simultanément oxydés.

Le milieu réactionnel peut également de plus contenir jusqu'à 10 % en volume d'eau sous forme vapeur.

Il peut également contenir de plus jusqu'à 10 % en volume d'oxygène.

Selon un autre mode de mise en oeuvre du procédé de l'invention, la réduction est effectuée à une température comprise entre 350°C et 500°C.

L'invention propose également l'utilisation d'un catalyseur constitué d'une zéolithe de type MFI ayant un rapport Si/Al compris entre 15 et 19 échangée avec entre 0,3 % et 2 % en poids par rapport au poids total du catalyseur pour la réduction des $NO_x$ .

Selon une caractéristique de l'utilisation selon l'invention, ladite zéolithe est échangée avec 0,5 % en poids de Pd.

D'autres détails, caractéristiques et avantages de l'invention apparaîtront mieux au cours de la description détaillée qui va suivre et qui est faite en référence aux figures annexées dans lesquelles :

La figure 1 illustre l'influence de la teneur de Pd échangé dans une zéolithe de type MFI, sur les pourcentages de $CH_4$ et de NO convertis.

La figure 2 illustre l'influence de la teneur en Pd échangé dans une zéolithe de type mordénite protonée à larges pores, sur les conversions de $CH_4$ et de NO.

La zéolithe de type MFI, préparée selon un procédé connu en soi présente un rapport Si/Al très variable qui peut atteindre des valeurs extrêmes (1000). Ce support a ensuite servi à la préparation de catalyseurs à base d'ions de métaux de transition par échange cationique entre les ions de la zéolithe ($H^+$, $Na^+$, $Ca^{2+}$,...) et ceux des métaux de transition. Cet échange permet d'obtenir des ions métalliques dispersés et stabilisés au sein du réseau zéolithique.

Les zéolithes échangées avec des métaux précieux selon l'invention ont été préparées par échange cationique en utilisant des précurseurs adéquats. L'hydroxyde de tétrammine-palladium (II) est un précurseur particulièrement préféré.

Le protocole suivant a été suivi :

5 g de zéolithe sont mis dans un bécher, puis le précurseur est ajouté après avoir été dilué dans 50 $cm^3$ d'eau distillée. L'agitation est maintenue pendant une heure à une température de 25°C pour obtenir l'équilibre d'échange. Puis le solide est filtré et lavé avec une quantité abondante d'eau distillée (environ 1 litre). Il est ensuite séché à l'étuve à 120°C pendant une nuit.

Ce procédé de préparation permet d'obtenir un catalyseur à base de palladium échangé dans la zéolithe MFI qui présente l'intérêt d'avoir des ions $Pd^{2+}$, en faible quantité certes, mais très séparés les uns des autres ce qui limite doublement les possibilités d'agglomération.

Les tests catalytiques ont été effectués dans un micro-réacteur à lit traversé constitué d'un tube en U sans fritté dans lequel on place un petit tampon de laine de quartz sur lequel on dépose 200 mg de catalyseur.

Le catalyseur est ensuite activé in-situ sous oxygène en procédant à une montée en température lente (0,5°C/mn) de 25°C à 300°C suivie d'un palier à 300°C pendant 1 heure avant d'être amené à une température de 500°C avec une vitesse de montée entre 300°C et 500°C de 0,5°C/mn. La température est ensuite maintenue à 500°C pendant 1 heure avant de procéder à une descente à 300°C sous oxygène. Puis on balaye pendant 30 minutes le catalyseur avec de l'hélium avant d'injecter le mélange réactionnel comprenant des gaz tels que le méthane, les $NO_x$, le monoxyde de carbone, l'oxygène et l'eau sous forme de vapeur.

Les gaz de sortie sont analysés avec deux chromatographes ou des analyseurs par infra-rouge selon la nature du gaz à analyser. Le premier chromatographe est un chromatographe à détection catharométrique, INTERSMAT IGC 121 ML. La colonne de séparation est une colonne CTR d'une longueur de 2 mètres, d'un diamètre de ¼ de pouce en acier inox contenant un tamis moléculaire 5A et du PORAPAK Q. Le gaz vecteur est l'hélium. Le four, l'injecteur et le détecteur sont à une température de 40°C. La sensibilité du détecteur est de 250 mA.

Le deuxième chromatographe est un chromatographe à détection pour ionisation de flamme (F.I.D.) INTERSMAT IGC 120 FB. La colonne a une longueur de 2 mètres et un diamètre de $^1$/8 de pouce et contient du PORAPAK Q.

Le gaz vecteur est l'hélium. La température du four est de 130°C. La température de l'injecteur est de 175°C et celle du détecteur catharométrique est de 170°C.

Les teneurs en Si, Al, Pd ont été analysées par absorption atomique.

L'invention repose sur la découverte surprenante et ce contrairement à l'enseignement de l'art antérieur qu'un catalyseur constitué d'une zéolithe de type MFI échangée avec entre 0,3 % et 2 % en poids de palladium par rapport au poids total de catalyseur présente de nombreuses propriétés qui vont être décrites en relation avec les exemples qui vont suivre.

Dans ces exemples, c'est la réduction de NO plutôt que celle de $NO_2$ qui a été étudiée car il est admis par l'homme de l'art que NO est représentatif des $NO_x$.

Des vitesses spatiales de 35000 $h^{-1}$ ont été utilisées pour la réalisation des tests effectués dans les exemples 1 à 35 et 39 à 43.

EP 0 656 810 B1

Exemples 1 à 5.

Différents catalyseurs constitués de zéolithe MFI avec un rapport Si/Al = 15 échangée avec différentes teneurs en Pd ont été synthétisés comme décrit précédemment et testés à 500°C avec un mélange réactionnel comprenant 2 % en volume d'oxygène, 0,1 % en volume de méthane et 0,2 % en volume de NO.

Les conversions et sélectivités correspondant à l'activité initiale du catalyseur sont regroupées dans le tableau 1 ci-après :

| N° Exemple | Teneur en Pd en % | Conversion de $CH_4$ en % | Conversion de NO en % | Sélectivité en $N_2O$ en % | Sélectivité en $N_2$ en % |
|---|---|---|---|---|---|
| 1 | 0,3 | 42 | 28 | 0 | 100 |
| 2 | 0,49 | 78 | 40 | 0 | 100 |
| 3 | 0,74 | 69 | 28 | 7 | 93 |
| 4 | 0,98 | 73 | 32 | 0 | 100 |
| 5 | 1,94 | 96 | 27 | 8 | 92 |

Tableau 1

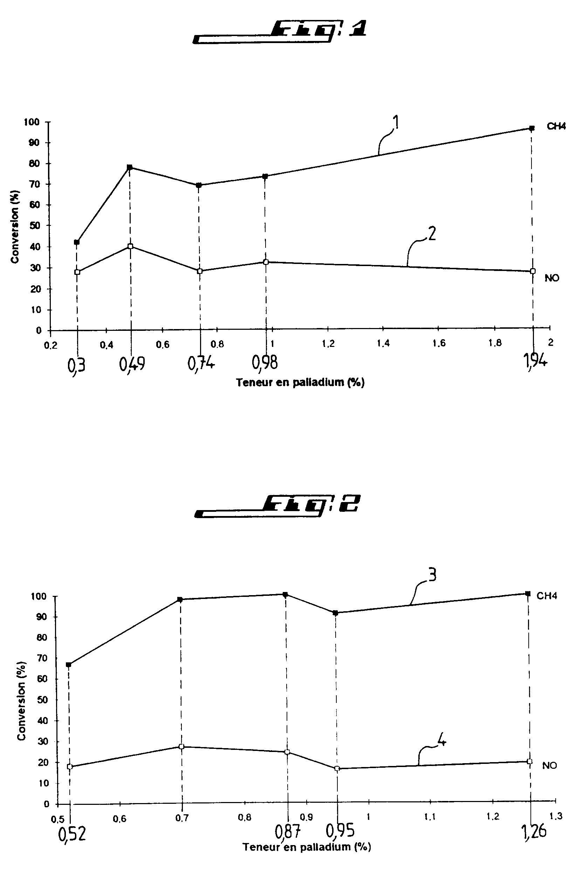

Ces résultats ont également été représentés sous forme de courbes 1 et 2 dans la figure 1 annexée.

Sur le graphe de la figure 1, on a représenté l'évolution des conversions du méthane (courbe 1) et de NO (courbe 2) en fonction de la teneur en Pd (% en poids) du catalyseur

On remarque alors que les conversions de NO et de $CH_4$ sont simultanément élevées pour des teneurs en palladium comprises entre environ 0,4 % et environ 0,6 % du poids total du catalyseur, le maximum d'activité se présentant au voisinage d'une teneur en palladium de 0,5 % en poids par rapport au poids total du catalyseur.

De plus, la sélectivité en $N_2$ est excellente avec ce catalyseur. Ainsi la formation de $N_2O$, indésirable, est quasi nulle.

Exemples 2 et 6 à 10.

Des catalyseurs constitués de zéolithe de type MFI avec un rapport Si/Al de 15 échangée avec environ 0,49 % en poids de palladium pour les exemples 2 et 6 à 8 et avec environ 0,97 % en poids de palladium pour les exemples 9 et 10 ont été testés à 500°C avec un mélange réactionnel contenant entre 0,2 % et 10 % en volume de $O_2$, 0,1 % en volume de $CH_4$ et 0,2 % en volume de NO.

Les conversions et sélectivités correspondant à l'activité initiale du catalyseur sont regroupées dans le tableau 2 ci-après.

4

| N° Exemple | Concentration en $O_2$ en % | Conversion de $CH_4$ en % | Conversion de NO en % | Sélectivité en $N_2O$ en % | Sélectivité en $N_2$ en % |
|---|---|---|---|---|---|
| 6 | 0,2 | 62 | 37 | 0 | 100 |
| 7 | 0,4 | 72 | 40 | 0 | 100 |
| 8 | 0,8 | 78 | 40 | 0 | 100 |
| 2 | 2 | 78 | 40 | 0 | 100 |
| 9 | 0,2 | 39 | 23 | 5 | 95 |
| 10 | 10 | 98 | 26 | 25 | 75 |

Tableau 2

On constate à partir de ces exemples que l'excellente aptitude à la conversion de NO des catalyseurs de l'invention ne dépend pratiquement pas de la teneur en oxygène lorsque celle-ci varie dans un intervalle de 0,2 % à 10 % en volume.

Exemples 2 et 11.

Les réactifs et les conditions de réactions sont similaires à ceux des exemples 2 et 6 à 8, mais la concentration en oxygène est fixée à 2 % en volume et les conversions et sélectivités correspondent à l'activité initiale du catalyseur puis à l'activité dudit catalyseur après 15 h de balayage (et donc de réaction).

Les résultats sont regroupés au tableau 3 ci-dessous.

| N° Exemple | Temps en heure | Conversion de $CH_4$ en % | Conversion de NO en % | Sélectivité en $N_2O$ en % | Sélectivité en $N_2$ en % |
|---|---|---|---|---|---|
| 2 | 0 | 78 | 40 | 0 | 100 |
| 11 | 15 | 78 | 40 | 0 | 100 |

Tableau 3

Ces résultats signifient que le catalyseur de l'invention est stable dans le temps.

Exemples 11 à 13.

Les réactifs et conditions de réactions sont similaires à ceux des exemples 2 et 11. La stabilité du catalyseur après 15 heures de réaction ayant été établie dans les exemples précédents, 0,8 % en volume de CO ont été ajoutés au mélange réactionnel au bout de 15 heures.

Les résultats de ces essais sont regroupés dans le tableau 4 ci-dessous.

| N° Exemple | Temps en heure | Concentra-tion CO en % | Conversion de $CH_4$ en % | Conversion de NO en % | Sélecti-vité en $N_2O$ en % | Sélecti-vité en $N_2$ en % |
|---|---|---|---|---|---|---|
| 11 | 15 | 0 | 78 | 40 | 0 | 100 |
| 12 | 16 | 0,8 | 75 | 40 | 0 | 100 |
| 13 | 20 | 0,8 | 78 | 40 | 0 | 100 |

Tableau 4

Comme le montrent les résultats regroupés dans ce tableau, l'introduction dans le mélange réactionnel de 0,8 % de CO ne modifie ni la conversion du méthane ni celle de NO. Le monoxyde de carbone est totalement converti en $CO_2$ à des températures très inférieures à celles nécessaires à la réduction de NO par le méthane. Cette propriété est importante car les gaz issus de la combustion du méthane peuvent contenir du CO. Celui-ci peut provenir soit d'une oxydation incomplète du méthane soit du WGS (water-gas-shift) :

$$CO_2 + H_2 \rightleftharpoons CO + H_2O,$$

soit encore du reformage du méthane :

$$CH_4 + H_2O \rightleftharpoons CO + 3H_2$$

Dans tous les cas CO apparaît comme un réducteur supplémentaire présent dans les effluents. CO peut alors réagir avec NO pour donner $CO_2$ et $N_2$. Cette réaction entre en compétition avec la réduction de NO par $CH_4$.

Ainsi on aurait pu penser que la présence de CO dans le mélange réactionnel aurait entraîné une diminution de la conversion du méthane. Il n'en est en fait rien, le catalyseur de l'invention permettant de ne pas modifier les conversions de $CH_4$ même en présence de 0,8 % de CO. De plus la sélectivité en $N_2$ n'est pas modifiée.

Exemples 14 à 17.

Des tests ont été effectués avec des catalyseurs constitués d'une zéolithe de type MFI avec un rapport Si/Al de 19 échangée avec environ 0,97 % en poids de Pd et avec un mélange réactionnel comprenant 1,6 % en volume d'oxygène, 0,1 % en volume de $CH_4$ et 0,2 % en volume de NO et dans lequel on a introduit de l'eau sous forme de vapeur, afin de tester l'activité et la sélectivité de ce catalyseur en présence d'eau.

En effet les gaz issus de la combustion du méthane contiennent de la vapeur d'eau et celle-ci est connue pour détériorer les performances de ce type de catalyseurs.

Les résultats sont regroupés au tableau 5

| N°<br>Exemple | Temps<br>en heure<br>après le<br>début du<br>balayage | Concentra-<br>tion $H_2O$<br>en % | Conversion<br>de $CH_4$<br>en % | Conversion<br>de NO<br>en % | Sélecti-<br>vité en<br>$N_2O$<br>en % | Sélecti-<br>vité en<br>$N_2$<br>en % |
|---|---|---|---|---|---|---|
| 14 | 0 | 0 | 89 | 38 | 5 | 95 |
| 15 | 0 | 5,3 | 91 | 32 | 10 | 90 |
| 16 | 1 | 7,5 | 92 | 31 | 19 | 81 |
| 17 | 2 | 10 | 89 | 27 | 6 | 94 |

Tableau 5

Ces résultats montrent que jusqu'à une teneur en eau d'environ 10 % en volume, l'activité du catalyseur reste excellente. La conversion du méthane est constante et celle de NO passe de 38 à 27 %.

Exemples 18 à 21.

Le catalyseur a ensuite été testé avec du gaz naturel et ce en présence d'oxygène, dans le but de tester l'applicabilité de ce catalyseur au traitement des gaz d'échappement des moteurs fonctionnant au gaz naturel ou équipés d'un système à bicarburation (essence/gaz naturel).

Les réactifs et les conditions de réactions sont similaires à ceux des exemples 2 et 6 à 8 mais la teneur en palladium est fixée à 0,97 %.

La composition volumique du gaz naturel est la suivante :

$CH_4$ = 91,37 %
$N_2$ = 0,70 %
$C_2H_6$ = 6,70 %
$C_3H_8$ = 1,10 %
iso$C_4H_{10}$=0,04 %
n$C_4H_{10}$ = 0,04 %
néo$C_5H_{12}$ = 0,01 %
iso$C_5H_{12}$ = 0,02 %
n$C_5H_{12}$ = 0,02 %

Les conversions et les sélectivités correspondant à l'activité initiale du catalyseur sont regroupées dans le tableau 6 ci-après.

| N° Exemple | Concentration en $O_2$ en % | Conversion de $CH_4$ en % | Conversion des hydrocarbures autres que $CH_4$ en % | Conversion de NO en % | Sélectivité en $N_2O$ en % | Sélectivité en $N_2$ en % |
|---|---|---|---|---|---|---|
| 18 | 0,2 | 91 | 100 | 28 | 6 | 94 |
| 19 | 0,4 | 94 | 100 | 30 | 7 | 93 |
| 20 | 0,8 | 95 | 100 | 31 | 6 | 94 |
| 21 | 2 | 89 | 100 | 32 | 10 | 90 |

Tableau 6

Ces résultats montrent que l'activité du catalyseur de l'invention est toute aussi bonne même en utilisant du gaz naturel.

Exemples 22 à 24

Enfin, des essais ont été réalisés avec des catalyseurs identiques à ceux des exemples 14 à 17 en présence d'un mélange représentatif des gaz d'échappement provenant d'une combustion d'essence (mélange stoechiométrique) et à différentes températures de réaction.

En effet dans le cadre d'une application à un moteur équipé d'un système à bi-carburation essence/gaz naturel, le pot catalytique doit pouvoir traiter les gaz d'échappement issus de la combustion de ces deux carburants.

Le mélange réactionnel comprend alors 5025 ppm de CO, 685 ppmv de NO, 1060 ppmv de $C_3H_6$ et 6940 ppmv de $O_2$.

Les résultats de ces essais sont regroupés au tableau 7 ci-après.

| N° Exemple | Température en °C | Conversion de CO en % | Conversion de $C_3H_6$ en % | Conversion de NO en % | Sélectivité en $N_2O$ en % | Sélectivité en $N_2$ en % |
|---|---|---|---|---|---|---|
| 22 | 360 | 56 | 70 | 44 | 0 | 100 |
| 23 | 409 | 100 | 98 | 74 | 15 | 85 |
| 24 | 440 | 100 | 100 | 100 | 0 | 100 |

Tableau 7

Le catalyseur montre donc une excellente activité pour des gaz d'échappement issus de la combustion du gaz naturel et de l'essence à des températures comprises entre 350°C et 450°C.

Par ailleurs, à titre de comparaison, différents catalyseurs ont été testés :

- des catalyseurs constitués d'une zéolithe de type mordénite à larges pores échangée avec différentes teneurs en Pd,

- des catalyseurs constitués de zéolithe de type mordénite à larges pores et MFI échangées ou imprégnées avec du cobalt à des concentrations variables.

Exemples comparatifs 25 à 29

Dans ces exemples, la zéolithe protonée à larges pores est obtenue par calcination d'une mordénite sous forme ammonium commerciale de composition correspondant à un rapport Si/Al de 5,5.

Cette zéolithe $NH_4M$ est calcinée pour éliminer $NH_3$ et obtenir la forme protonée de la mordénite.

Cette zéolithe est ensuite échangée avec du palladium à différentes teneurs et testée à une température de 500°C avec un mélange réactionnel comprenant 2 % en volume d'oxygène, 0,1 % en volume de $CH_4$ et 0,2 % en volume de NO.

Les conversions et les sélectivités correspondant à l'activité initiale du catalyseur sont regroupées dans le tableau 8 ci-dessous.

| N° Exemple | Teneur en Pd en % | Conversion de $CH_4$ en % | Conversion de NO en % | Sélectivité en $N_2O$ en % | Sélectivité en $N_2$ en % |
|---|---|---|---|---|---|
| 25 | 0,52 | 67 | 18 | 0 | 100 |
| 26 | 0,7 | 98 | 27 | 0 | 100 |
| 27 | 0,87 | 100 | 24 | 0 | 100 |
| 28 | 0,95 | 91 | 16 | 4 | 96 |
| 29 | 1,26 | 100 | 19 | 0 | 100 |

Tableau 8

Ces résultats ont par ailleurs été reportés dans la figure 2 qui illustre l'influence de la teneur en Pd dans une zéolithe de type mordénite à larges pores sur l'activité du catalyseur. Dans cette figure, on a porté en abscisse le pourcentage en poids par rapport au poids total de catalyseur de Pd échangé dans une zéolithe de type mordénite à larges pores et en ordonnée les pourcentages correspondants de $CH_4$ (courbe 3) et de NO (courbe 4) convertis.

Sur toute la gamme des teneurs en palladium étudiée, on peut constater que l'activité de ce catalyseur en conversion de NO est inférieure à celle des catalyseurs de l'invention.

Exemples comparatifs 30 à 35

Des essais ont également été effectués sur des catalyseurs constitués d'une zéolithe de type MFI échangée ou imprégnée avec du cobalt.

Le catalyseur constitué de zéolithe MFI échangée avec du cobalt a été préparé par échange des protons de la zéolithe MFI par des ions cobalt.

D'autres catalyseurs ont été préparés par imprégnation de cobalt sur un support de zéolithe de type MFI et sur un support de zéolithe de type mordénite protonée à larges pores selon le mode opératoire suivant :

le précurseur était du nitrate de cobalt dissous dans de l'eau qui a été ajouté à une masse connue de zéolithe. On a laissé sous agitation pendant 1 heure puis l'eau a été éliminée par évaporation à 60°C dans un évaporateur sous pression réduite. Après séchage pendant une nuit à 120°C, le solide a été calciné sous oxygène avec une montée lente en température de 0,5°C par minute suivie de deux paliers successifs de 1 heure à 300°C et de 1 heure à 500°C.

Ces catalyseurs à base de cobalt ont été testés à une température de 500°C avec un mélange réactionnel contenant 2 % en volume d'oxygène, 0,1 % en volume de méthane et 0,2 % en volume de NO.

Les conversions et les sélectivités correspondant à l'activité du catalyseur après des temps de balayage (et donc de réaction) variables sont regroupées au tableau 9 ci-après.

| N° Exemple | Catalyseur | Temps en heure après le début du bala-yage | Conver-sion de $CH_4$ en % | Conver-sion de NO en % | Sélecti-vité en $N_2O$ en % | Sélecti-cité en $N_2$ en % |
|---|---|---|---|---|---|---|
| 30 | 0,4%Co/MFI (e) | 0 | 26 | 5 | 0 | 100 |
| 31 | 0,4%Co/MFI (e) | 2 | 26 | 4 | 0 | 100 |
| 32 | 4,65%Co/HMLP*(i) | 0 | 86 | 33 | 0 | 100 |
| 33 | 4,65%Co/HMLP*(i) | 21 | 88 | 38 | 0 | 100 |
| 34 | 4,3%Co/MFI (i) | 0 | 80 | 7 | 0 | 100 |
| 35 | 4,3%Co/MFI (i) | 1 | 81 | 9 | 0 | 100 |

Tableau 9

Ces résultats montrent que seul un catalyseur constitué d'une zéolithe de type mordénite à larges pores imprégnée avec 4,65 % en poids de cobalt par rapport au poids total du catalyseur présente une activité comparable à celle du catalyseur de l'invention. Cependant ce type de catalyseur peut amener à la production de complexes de cobalt carbonyles toxiques.

Exemples 36 à 38

Les tests suivants ont été réalisés avec un mélange réactionnel comprenant 1000 ppm de $CH_4$, 2000 ppm de NO et 2 % de $O_2$ sur un catalyseur de l'invention, à une température de 500°C, afin de confirmer l'influence de la vitesse spatiale sur la conversion de $CH_4$ et de NO.

En effet, plus la vitesse spatiale est élevée, plus le temps de contact du milieu réactionnel avec le catalyseur est faible, ce qui entraîne normalement une diminution des pourcentages de $CH_4$ et NO convertis.

Les conversions de $H_4$ et NO obtenues à différentes vitesses spatiales sont regroupées au Tableau 10 ci-après.

| N° Exemple | Vitesse spatiale en h$^{-1}$ | Conversion de CH$_4$ en % | Conversion de NO en % |
|---|---|---|---|
| 36 | 35000 | 90 | 22 |
| 37 | 17500 | 98 | 29 |
| 38 | 8750 | 100 | 31 |

Tableau 10

Les exemples 36 à 38 montrent qu'un abaissement de la vitesse spatiale d'un facteur 4 augmente la conversion de NO d'environ 40 % et la conversion de CH$_4$ d'environ 10 %.

Exemples 39 à 43

L'influence sur la conversion de NO de la quantité de réducteur (méthane) utilisée a été étudiée.

Un catalyseur constitué d'une zéolithe de type MFI avec un rapport Si/Al = 18, échangée avec 0,97 % de Pd a été testé en présence de 2 % d'oxygène, à une température de 500°C et une vitesse spatiale de 35000 h$^{-1}$. La concentration de NO a été maintenue constante à 2000 ppmv.

Les résultats sont regroupés au tableau 11 ci-après.

| N° Exemple | Concentration de CH$_4$ en ppm | Concentration de NO en ppm | Conversion de NO en % |
|---|---|---|---|
| 39 | 1000 | 2000 | 33 |
| 40 | 2000 | 2000 | 43 |
| 41 | 3000 | 2000 | 45 |
| 42 | 4000 | 2000 | 45 |
| 43 | 5000 | 2000 | 43 |

Tableau 11

Les résultats regroupés au tableau 11 montrent une augmentation du pourcentage de NO convertis lorsque la concentration du méthane augmente de 1000 ppmv à 2000 ppm. Au-delà de 2000 ppmv et jusqu'à 5000 ppmv de CH$_4$, le pourcentage de NO convertis reste constant.

Le catalyseur selon l'invention présente donc l'avantage de pouvoir être utilisé en milieu oxydant, plus particulièrement en milieu contenant jusqu'à 10 % d'oxygène, avec du méthane ou du gaz naturel ou de l'essence, en présence de jusqu'à 10 % d'eau, et ce dans des conditions difficiles, c'est à dire avec une faible concentration en Pd, des vitesses spatiales élevées et des concentrations en réducteur faibles. De plus il n'amène pas à la production de composés toxiques, tels que le CO qui est totalement converti en CO$_2$, ce qui permettrait en particulier de l'utiliser comme catalyseur dans les pots catalytiques des moteurs fonctionnant au gaz naturel.

Bien entendu, l'invention n'est nullement limitée aux modes de réalisation décrits et illustrés qui n'ont été donnés qu'à titre d'exemples.

Ainsi, le catalyseur selon l'invention pourrait être employé dans d'autres conditions opératoires, par exemple, avec des concentrations en NO, CH$_4$ différentes, que ce soit en lit fixe ou fluidisé.

C'est dire que l'invention comprend tous les équivalents techniques des moyens décrits ainsi que leurs combinaisons si celles-ci sont effectuées suivant les revendications.

**Revendications**

1. Catalyseur de réduction des $NO_x$ constitué d'une zéolithe de type MFI échangée avec entre 0,3 % et 2 % en poids de Pd par rapport au poids total du catalyseur caractérisé en ce que ladite zéolithe de type MFI a un rapport Si/Al compris entre 15 et 19.

2. Catalyseur selon la revendication 1 caractérisé en ce que ladite zéolithe est échangée avec 0,5% en poids de Pd.

3. Procédé de réduction des $NO_x$ par le méthane ou tout mélange contenant majoritairement du méthane, tel que du gaz naturel, caractérisé en ce qu'il comprend une étape de mise en contact d'un milieu réactionnel comprenant entre autres du méthane, de l'oxygène et des $NO_x$ avec un catalyseur constitué d'une zéolithe de type MFI échangée avec entre 0,3% et 2% en poids de palladium par rapport au poids total du catalyseur, ladite zéolithe ayant un rapport Si/Al compris entre 15 et 19, ce qui permet de réduire sélectivement les $NO_x$ en $N_2$.

4. Procédé selon la revendication 3, caractérisé en ce que la zéolithe de type MFI est échangée avec 0,5 % en poids de palladium par rapport au poids total du catalyseur.

5. Procédé selon la revendication 3 ou 4, caractérisé en ce que ledit catalyseur est obtenu avec de l'hydroxyde de tétrammine-palladium II en tant que précurseur de Pd.

6. Procédé selon l'une quelconque des revendications 3 à 5, caractérisé en ce que le catalyseur est activé, avant utilisation, sous oxygène, par un procédé comprenant les étapes de :

   (a) montée en température à partir de la température ambiante jusqu'à 300°C avec une vitesse de montée en température de 0,5°C/mn,

   (b) maintien à 300°C pendant 1 heure,

   (c) montée en température de 300°C à 500°C avec une vitesse de montée en température de 0,5°C/mn,

   (d) maintien à 500°C pendant 1 heure, et

   (e) descente en température de 500°C à 300°C.

7. Procédé selon la revendication 6, caractérisé en ce qu'après l'étape (e) on réalise une étape (f) de balayage par un gaz inerte, tel que l'hélium, à 300°C.

8. Procédé selon l'une quelconque des revendications 3 à 7, caractérisé en ce que ledit milieu réactionnel peut contenir jusqu'à 0,8 % en volume de CO qui sont alors simultanément oxydés.

9. Procédé selon l'une quelconque des revendications 3 à 8, caractérisé en ce que ledit milieu réactionnel peut contenir jusqu'à 10 % en volume d'eau sous forme vapeur.

10. Procédé selon l'une quelconque des revendications 3 à 9, caractérisé en ce que ledit milieu réactionnel peut contenir jusqu'à 10 % en volume d'oxygène.

11. Procédé selon l'une quelconque des revendications 3 à 10, caractérisé en ce que ladite réduction est effectuée à une température comprise entre 350°C et 500°C.

12. Utilisation d'un catalyseur constitué d'une zéolithe de type MFI ayant un rapport Si/Al compris entre 15 et 19 échangée avec entre 0,3% et 2% en poids de Pd par rapport au poids total du catalyseur pour la réduction des $NO_x$.

13. Utilisation selon la revendication 12, caractérisée en ce que ladite zéolithe est échangée avec 0,5% en poids de Pd.

**Claims**

1. Catalyst for the reduction of the nitrogen oxides consisting of a zeolite of the MFI type exchanged for between 0.3 % and 2 % by weight of Pd with respect to the total weight of the catalyst, characterized in that the said zeolite of the of the MFI type has a Si/Al ratio lying between 15 and 19.

2. Catalyst according to claim 1, characterized in that the said zeolite is exchanged for 0.5 % by weight of Pd.

3. Method for the reduction of the nitrogen oxides by methane or any mixture predominantly containing methane such as natural gas, characterized in that it comprises a step of contacting a reaction medium comprising methane among others, oxygen and nitrogen oxides with a catalyst consisting of a zeolite of the MFI type exchanged for between 0.3 % and 2 % by weight of palladium with respect to the total weight of the catalyst, the said zeolite having a Si/Al ratio lying between 15 and 19, thereby permitting to selectively reduce the nitrogen oxides into $N_2$.

4. Method according to claim 3, characterized in that the zeolite of the MFI type is exchanged for 0.5% by weight of palladium with respect to the total weight of the catalyst.

5. Method according to claim 3 or 4, characterized in that the said catalyst is obtained with tetramine-palladium II hydroxide as a precursor of Pd.

6. Method according to any one of claims 3 to 5, characterized in that the catalyst is activated, before use, under oxygen by a process comprising the steps of:

(a) a temperature rising from the ambient temperature up to 300°C with a temperature rising speed of 0.5°C/mn,

(b) keeping at 300°C for 1 hour,

(c) a temperature rising from 300°C to 500°C with a temperature rising speed of 0.5°C/mn,

(d) keeping at 500°C for 1 hour, and

(e) a temperature decrease from 500°C down to 300°C.

7. Method according to claim 6, characterized in that after the step (e), one carries out a step (f) of scavenging with an inert gas such as helium at 300°C.

8. Method according to any one of claims 3 to 7, characterized in that the said reaction medium may contain up to 0.8 % by volume of CO which is then simultaneously oxidized.

9. Method according to any one of claims 3 to 8, characterized in that the said reaction medium may contain up to 10% by volume of water as vapour.

10. Method according to any one of claims 3 to 9, characterized in that the said reaction medium may contain up to 10% by volume of oxygen.

11. Method according to any one of claims 3 to 10, characterized in that the said reduction is effected at a temperature lying between 350°C and 500°C.

12. Utilization of a catalyst consisting of a zeolite of the MFI type having a Si/Al ratio lying between 15 and 19, exchanged for between 0.3% and 2% by weight of Pd with respect to the total weight of the catalyst for the reduction of the nitrogen oxides.

13. Utilization according to claim 12, characterized in that the said zeolite is exchanged for 0.5% by weight of Pd.

**Patentansprüche**

1. Aus einem Zeolith der MFI-Gattung gebildeter Katalysator zur Reduktion der Stickstoffoxide, welcher Zeolith gegen zwischen 0,3 Gewichtsprozent und 2 Gewichtsprozent Pd in bezug auf das Gesamtgewicht des Katalysators ausgetauscht wird, dadurch gekennzeichnet, daß der besagte Zeolith der MFI-Gattung ein zwischen 15 und 19 liegendes Si/Al-Verhältnis hat.

2. Katalysator gemäß Anspruch 1, dadurch gekennzeichnet, daß der besagte Zeolith gegen 0,5 Gewichtsprozent Pd ausgetauscht wird.

3. Verfahren zur Reduktion der Stiffstoffoxide mit Methan oder jedem überwiegend Methan enthaltenden Gemisch, wie Erdgas, dadurch gekennzeichnet, daß es einen Schritt zum Inberührungbringen eines unter anderem Methan, Sauerstoff und Stickstoffoxide enthaltenden Reaktionsmediums mit einem aus einem Zeolith der MFI-Gattung gebildeten Katalysator umfaßt, welcher Zeolith gegen zwischen 0,3 Gewichtsprozent und 2 Gewichtsprozent Palladium in bezug auf das Gesamtgewicht des Katalysators ausgetauscht wird, wobei der besagte Zeolith ein zwischen 15 und 19 liegendes Si/Al-Verhältnis aufweist, wodurch gestattet wird, die $NO_x$ in $N_2$ wahlweise zu reduzieren.

4. Verfahren nach Anspruch 3, dadurch gekennzeichnet, daß der Zeolith der MFI-Gattung gegen 0,5 Gewichtsprozent Palladium in bezug auf das Gesamtgewicht des Katalysators ausgetauscht wird.

5. Verfahren nach Anspruch 3 oder 4, dadurch gekennzeichnet, daß der besagte Katalysator mit Tetramin-Palladium II - Hydroxid als Zwischenstoff von Pd erhalten wird.

6. Verfahren nach irgendeinem der Ansprüche 3 bis 5, dadurch gekennzeichnet, daß der Katalysator vor der Verwendung unter Sauerstoff durch ein Verfahren aktiviert wird, daß die folgenden Schritte umfaßt :

(a) Temperatursteigerung von der Umgebungstemperatur bis 300°C mit einer Temperatursteigerungsgeschwindigkeit von 0,5°C/mn,

(b) Halten bei 300°C während einer Stunde,

(c) Temperatursteigerung von 300°C bis 500°C mit einer Temperatursteigerungsgeschwindigkeit von 0,5°C/mn,

(d) Halten bei 500°C wahrend einer Stunde, und

(e) Temperatursenkung von 500°C bis 300°C.

7. Verfahren gemäß Anspruch 6, dadurch gekennzeichnet, daß nach dem Schritt (e) man einen Spülungsschritt (f) mit einem Inertgas, wie Helium, bei 300°C durchführt.

8. Verfahren nach irgendeinem der Ansprüche 3 bis 7, dadurch gekennzeichnet, daß das besagte Reaktionsmedium bis 0,8 Volumenprozent von CO, das dann gleichzeitig oxidiert wird, enthält.

9. Verfahren nach irgendeinem der Ansprüche 3 bis 8, dadurch gekennzeichnet, daß das besagte Reaktionsmedium bis 10 Volumenprozent Wasser in der Form von Dampf enthalten kann.

10. Verfahren nach irgendeinem der Ansprüche 3 bis 9, dadurch gekennzeichnet, daß das besagte Reaktionsmedium bis 10 Volumenprozent Sauerstoff enthalten kann.

11. Verfahren nach irgendeinem der Ansprüche 3 bis 10, dadurch gekennzeichnet, daß die besagte Reduktion bei einer zwischen 350°C und 500°C liegenden Temperatur durchgeführt wird.

12. Verwendung eines durch einen ein zwischen 15 und 19 liegendes Si/Al-Verhältnis aufweisenden Zeolith der MFI-Gattung gebildeten Katalysators, welcher Zeolith gegen zwischen 0,3 Gewichtsprozent und 2 Gewichtsprozent Pd in bezug auf das Gesamtgewicht des Katalysators für die Reduktion der Stickstoffoxide ausgetauscht wird.

13. Verwendung gemäß Anspruch 12, dadurch gekennzeichnet, daß der besagte Zeolith gegen 0,5 Gewichtsprozent Pd ausgetauscht wird.

### Fig. 1

### Fig. 2